# FASCICULE DE BREVET EUROPEEN

(11) **EP 3 971 405 B1**
(45) Date de publication et mention de la délivrance du brevet: **08.11.2023**
(21) Numéro de dépôt: 20306070.2
(22) Date de dépôt: 21.09.2020
(51) Int. Cl.: F02K 9/08, F02K 9/32, F02K 9/86, F02K 9/80

(54) **PROPULSEUR AVEC LIAISON SOLLICITÉE THERMIQUEMENT**
PROPELLER MIT THERMISCH BEANSPRUCHTER VERBINDUNG
PROPELLER WITH THERMALLY STRESSED LINK

(43) Date de publication de la demande: 23.03.2022
(73) Titulaire: ROXEL France, 33160 Saint Médard en Jalles (FR)
(72) Inventeur: SOLER, Christian, 33160 Saint-Médard-en-Jalles (FR)
(74) Mandataire: Brevalex

(56) Documents cités:
- EP-A1- 0 238 369
- GB-A- 2 570 983
- US-B1- 7 849 695

## Description

La présente invention se situe dans le domaine de l'isolation thermique entre deux pièces et concerne un propulseur avec liaison sollicitée thermiquement. L'invention s'applique particulièrement à un propulseur comprenant un pointeau baignant dans un flux d'air chaud d'une part et relié à un composant dit froid par un système d'attache.

Une chambre de combustion dans le propulseur stocke le chargement propulsif de propergol solide. La poussée est produite par initiation du chargement de propergol solide par un dispositif d'allumage. Pendant cette phase, les gaz débités sont accélérés par la ou les tuyère(s) et convertis en poussée. Le contrôle de poussée dans le propulseur à propergol solide se fait au moyen d'un pointeau. La vitesse de combustion étant sensible à la pression, une variation de la section du col de la ou les tuyère(s) produit une variation de la pression de combustion et ainsi une variation de débit.

Dans l'art antérieur, il existe une solution dans laquelle un pointeau s'étend dans le col de la tuyère et est actionné par un électro-aimant. Une autre solution consiste à placer un pointeau dans la tuyère en aval par rapport à l'écoulement des gaz et déplacé axialement dans le col par un système de vérins.

Ces solutions ne sont pas satisfaisantes. En effet, en plus d'être relativement compliquées à mettre en oeuvre, le pointeau de ces solutions est entièrement baigné par les gaz chauds. Et son isolation thermique est rendue difficile. Le document GB 2570983 décrit un propulseur comprenant un pointeau avec une pièce intermédiaire prenant la forme de bille. Le document EP 3499013 décrit une valve de buse pour un propulseur comprenant un levier pouvant tourner autour d'un axe de rotation. Le document US 2017/350350 décrit un pointeau comprenant un bouchon apte à coulisser.

Comme expliqué, un pointeau est soumis à de fortes températures pendant des durées de combustion pouvant aller jusqu'à plusieurs minutes. Les températures extrêmement élevées à l'intérieur de la chambre de combustion du propulseur peuvent être supérieures à 2000 K. Certains composants du propulseur doivent donc être protégés afin de s'assurer du maintien de leur intégrité tout le long du tir.

Le pointeau fait partie de ces composants particulièrement exposés au flux de chaleur. Une de ses extrémités baigne dans le flux de gaz chauds et son autre extrémité est généralement reliée à un système d'attache avec un activateur pour assurer le déplacement du pointeau dans le col de la tuyère, lui-même relié au corps du propulseur. Le système d'attache est fortement sollicité thermiquement puisque le flux de chaleur remonte par le pointeau, qui est généralement en un matériau très conducteur thermiquement, et ne peut donc pas rester intègre tout le long du tir.

L'invention vise à pallier tout ou partie des problèmes cités plus haut en proposant un propulseur comprenant une pièce intermédiaire ayant un rôle d'isolant thermique entre le pointeau extrêmement chaud et le système d'attache froid. La pièce intermédiaire a la propriété d'un excellent isolant thermique et présente une très bonne résistance aux chocs mécaniques importants auxquels le pointeau est soumis lorsque l'activateur déplace le pointeau en quelques millisecondes.

A cet effet, l'invention a pour objet un propulseur comprenant :
a. une chambre de combustion destinée à recevoir un chargement propulsif,
b. un ensemble-tuyère composé de une ou plusieurs tuyères par lequel la détente de gaz de combustion issus du chargement propulsif après allumage du chargement propulsif s'effectue,
c. un pointeau destiné à faire varier une section d'un col de l'ensemble-tuyère, sollicité thermiquement par les gaz de combustion,
d. un système d'attache apte à assurer un déplacement du pointeau dans le col de l'ensemble-tuyère,
e. une pièce intermédiaire positionnée entre le pointeau et le système d'attache, destinée à isoler thermiquement le système d'attache du pointeau, et au moins une partie de la pièce intermédiaire est réalisée dans un matériau présentant des caractéristiques thermiques isolantes, de type céramique, la pièce intermédiaire enveloppant au moins partiellement le pointeau, une partie du pointeau s'étendant longitudinalement selon un premier axe Z, une portion de la partie du pointeau s'étendant longitudinalement selon le premier axe Z formant une surface de contact avec la pièce intermédiaire, et la normale à la surface de contact étant sécante avec le premier axe Z, ledit propulseur étant caractérisé en ce que la surface de contact est de forme tronconique.

Avantageusement, la normale à la surface de contact forme un angle avec le premier axe Z en tout point de la surface de contact.

Avantageusement, le système d'attache comprend une partie formant une enveloppe d'au moins une partie de la pièce intermédiaire.

Avantageusement, le propulseur selon l'invention comprend en outre au moins un joint élastique entre le système d'attache et la pièce intermédiaire.

L'invention sera mieux comprise et d'autres avantages apparaîtront à la lecture de la description détaillée d'un mode de réalisation donné à titre d'exemple, description illustrée par le dessin joint dans lequel :

[Fig.1] la figure 1 représente schématiquement un propulseur avec un pointeau et un système d'attache selon l'invention ;

[Fig.2] la figure 2 représente schématiquement, à titre illustratif, une liaison entre le pointeau et son système d'attache;

[Fig.3] la figure 3 représente schématiquement, à titre illustratif, une variante d'une liaison entre le pointeau et son système d'attache;

[Fig.4] la figure 4 représente schématiquement une autre variante de la liaison entre le pointeau et son système d'attache selon l'invention ;

[Fig.5] la figure 5 représente schématiquement un propulseur avec un pointeau et un système d'attache selon l'invention.

Par souci de clarté, les mêmes éléments porteront les mêmes repères dans les différentes figures. Pour une meilleure visibilité et dans un souci de compréhension accrue, les éléments ne sont pas toujours représentés à l'échelle.

L'invention est décrite dans le domaine de la propulsion en relation avec une tuyère de propulseur équipée d'un système de pointeau permettant de faire varier la section de col de tuyère en cours de fonctionnement et donc exposé aux gaz chauds issus de la combustion du chargement propulsif.

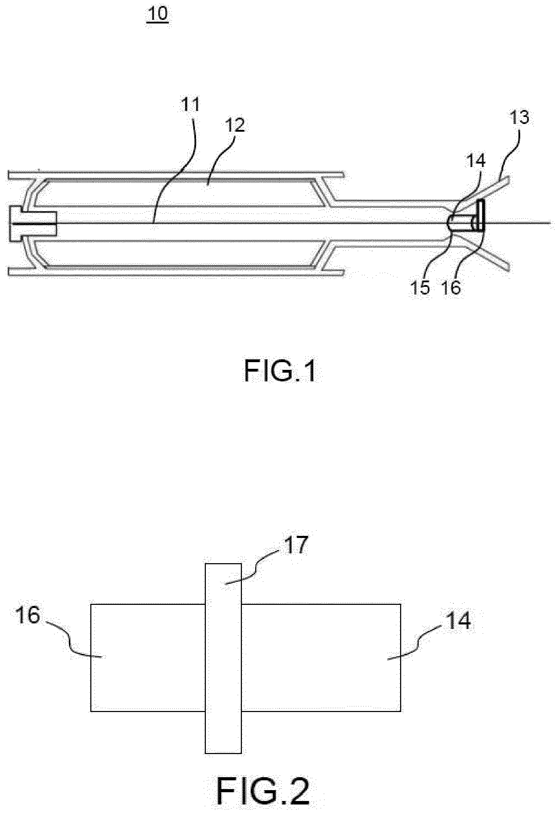

La figure 1 représente schématiquement un propulseur 10 avec un pointeau 14 et un système d'attache 16 selon l'invention. Le chargement propulsif 12 de propergol solide est stocké dans la chambre de combustion 11. L'initiation du chargement de propergol solide par un dispositif d'allumage 9 génère une poussée. Pendant cette phase, les gaz débités sont accélérés par un ensemble-tuyère 13 et convertis en poussée. Le contrôle de poussée dans le propulseur 10 à propergol solide se fait au moyen d'un pointeau 14. La variation de la section du col 15 de l'ensemble-tuyère(s) 13 se fait par déplacement du pointeau 14 dans le col 15. Le système d'attache 16 est relié au pointeau 14 et assure le déplacement du pointeau 14 de façon connue de l'Homme du métier. Le déplacement du pointeau 14 dans le col 15 produit une variation de la pression de combustion et ainsi une variation de débit. C'est ce qui permet de contrôler la poussée.

Le propulseur 10 selon l'invention comprend donc une chambre de combustion 11 destinée à recevoir un chargement propulsif 12, un ensemble-tuyère 13 composé de une ou plusieurs tuyères par lequel la détente de gaz de combustion issus du chargement propulsif 12 après allumage du chargement propulsif 12 s'effectue, un pointeau 14 destiné à faire varier une section 15 d'un col de l'ensemble-tuyère 13, sollicité thermiquement par les gaz de combustion, et un système d'attache 16 apte à assurer un déplacement du pointeau 14 dans le col de l'ensemble-tuyère 13. Selon l'invention, le propulseur comprend une pièce intermédiaire 17 positionnée entre le pointeau 14 et le système d'attache 16, destinée à isoler thermiquement le système d'attache 16 du pointeau 14, et au moins une partie de la pièce intermédiaire 17 est réalisée dans un matériau qui présente des caractéristiques thermiques isolantes, de type céramique.

Toute la difficulté de mise en oeuvre d'un pointeau 14 dans le col 15 d'un ensemble-tuyère réside dans la résistance mécanique et thermique des matériaux de liaison pour des durées de fonctionnement longues. Généralement, avec les matériaux usuels, la température de fusion de la plupart des matériaux est atteinte ou leur résistance mécanique a une dégradation rédhibitoire pour ce type d'application.

Le pointeau 14 est généralement constitué d'un matériau résistant à la température, à l'ablation et avec des propriétés mécaniques adaptées aux conditions extrêmes de fonctionnement. Le système d'attache 16 utilise un matériau qui doit résister aussi thermiquement aux gaz chauds. De façon connue, l'assemblage des différents composants peut être réalisé par collage et/ou au moyen de vis, rivets, etc.

Le matériau thermiquement isolant a la propriété de rester intègre aux flux de chaleur auxquels le pointeau 14 est soumis pendant des durées de combustion pouvant aller jusqu'à plusieurs minutes. En plus d'être un excellent isolant thermique, ce matériau doit résister à des chocs mécaniques importants, notamment lorsque l'activateur déplace le pointeau au niveau du col 15 de l'ensemble-tuyère 13.

En outre, la pièce intermédiaire 17 dont au moins une partie est réalisée dans un matériau présentant des caractéristiques thermiques isolantes, de type céramique permet de compenser les effets de dilatation différentielle des matériaux de part et d'autre de la liaison entre le pointeau 14 chaud et le système d'attache 16 froid.

En d'autres termes, la pièce intermédiaire 17 répond favorablement aux contraintes de résistance mécanique et thermique des matériaux de liaison pour des durées de fonctionnement assez longues.

La figure 2 représente schématiquement, à titre illustratif, une liaison entre le pointeau 14 et son système d'attache 16. Ce mode de réalisation ne fait pas partie de l'invention mais est utile à la compréhension de l'invention. Comme expliqué précédemment, l'invention repose sur l'insertion entre le composant chaud (le pointeau 14) et le composant froid (le système d'attache 16) de la pièce intermédiaire 17 dont au moins une partie est réalisée dans un matériau présentant des caractéristiques thermiques isolantes, de type céramique. Autrement dit, la pièce intermédiaire 17 dispose d'un excellent pouvoir isolant et est résistante aux très hautes températures, supérieures à 2000 K.

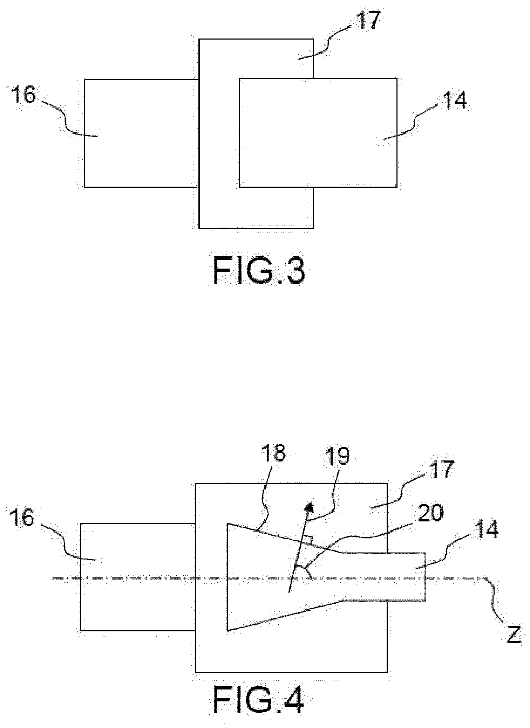

La figure 3 représente schématiquement, à titre illustratif, une variante d'une liaison entre le pointeau 14 et son système d'attache 16. Ce mode de réalisation ne fait pas partie de l'invention mais est utile à la compréhension de l'invention. Dans cette variante, la pièce intermédiaire 17 enveloppe au moins partiellement le pointeau 14.

Le matériau choisi pour constituer au moins partiellement la pièce intermédiaire 17, doit posséder une qualité d'isolant thermique. Comme expliqué ci-après, une variante de l'invention permet de pallier la fragilité potentielle de ce type de matériau.

La figure 4 représente schématiquement une autre variante de la liaison entre le pointeau 14 et son système d'attache 16 selon l'invention. Une partie du pointeau 14 s'étend longitudinalement selon un premier axe Z, une portion de la partie du pointeau 14 s'étendant longitudinalement selon le premier axe Z forme une surface de contact 18 avec la pièce intermédiaire 17, et la normale 19 à la surface de contact 18 est sécante avec le premier axe Z. Autrement dit, dans ce mode de réalisation de l'invention, la pièce intermédiaire 17 forme un contact tronconique avec le pointeau 14. La géométrie de la pièce intermédiaire 17 permet d'adoucir les champs de contrainte lorsqu'elle est soumise à un choc mécanique. Le contact tronconique entre la pièce intermédiaire 17 et la pièce chaude (le pointeau 14) permet de limiter les contraintes internes.

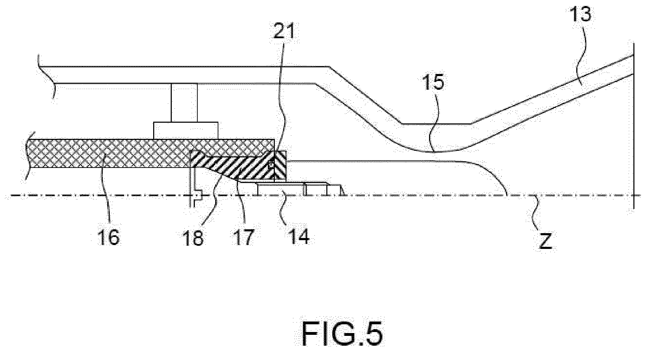

Il est également possible de considérer le cas où la pièce froide (c'est-à-dire le système d'attache 16) emprisonne par l'extérieur la pièce intermédiaire 17. Cette configuration est visible sur la figure 5, décrite ci-après. Cela permet de contenir l'ensemble de la pièce intermédiaire 17 même si le matériau devait se fissurer.

Selon un autre mode de réalisation de l'invention, la normale 19 à la surface de contact 18 peut former un angle 20 avec le premier axe Z en tout point de la surface de contact 18. La pièce intermédiaire 17 forme alors un contact essentiellement conique avec le pointeau 14. La géométrie de la pièce intermédiaire 17 et la surface de contact 18 entre le pointeau 14 et la pièce intermédiaire 17 peuvent être déterminées au moyen d'essais ou, plus avantageusement, grâce à des outils de simulation permettant de calculer les contraintes mécaniques internes appliquées à la pièce intermédiaire 17 en fonction des conditions de fonctionnement du propulseur.

La figure 5 représente schématiquement un propulseur avec un pointeau 14 et un système d'attache 16 selon l'invention. A une de ses extrémités, le pointeau 14 se positionne dans le col 15 de l'ensemble-tuyère 13 et permet d'en faire varier la section de passage des gaz. A son autre extrémité, le pointeau 14 est connecté au système d'attache 16. Ce système d'attache 16 permet de déplacer le pointeau 14 selon la position que l'on souhaite lui faire prendre, en lien avec un objectif de poussée souhaitée. Le pointeau 14 est connecté au système d'attache 16 par l'intermédiaire de la pièce intermédiaire 17. Comme déjà mentionné précédemment, la surface de contact 18 entre la pièce intermédiaire 17 et le pointeau 14 est avantageusement de forme tronconique pour limiter les contraintes internes appliquées à la pièce intermédiaire 17. La géométrie de la pièce intermédiaire 17 est donc préalablement étudiée de sorte à permettre d'adoucir les champs de contrainte lorsqu'elle est soumise à un choc mécanique.

Grâce à l'invention, une isolation thermique entre deux équipements dans une architecture miniaturisée très fortement sollicitée mécaniquement et thermiquement dans un environnement thermochimique agressif est réalisée. La liaison entre le pointeau 14 et son système d'attache 16 est obtenue grâce à la pièce intermédiaire 17 possédant une géométrie particulière formant un contact conique avec le pointeau 14. Le cône de contact transforme un effort axial en deux composantes : une composante radiale et une composante axiale. Les efforts de cisaillement appliqués à la pièce intermédiaire 17 sont ainsi diminués. La composante radiale est quant à elle reprise par la pièce intermédiaire 17 ainsi que, le cas échéant, par l'enveloppe du système d'attache 16.

Comme représenté sur la figure 5, le système d'attache 16 peut comprendre une partie formant une enveloppe de la au moins une partie de la pièce intermédiaire 17. L'enveloppe ainsi formée permet d'emprisonner la pièce intermédiaire 17 par l'extérieur. Il en résulte qu'en cas de fissuration du matériau formant partiellement ou totalement la pièce intermédiaire 17, la pièce intermédiaire 17 demeure contenue dans l'enveloppe ainsi formée.

Avantageusement, le propulseur selon l'invention peut comprendre en outre au moins un joint élastique 21 entre le système d'attache 16 et la pièce intermédiaire 17. Le joint élastique 21 permet de compenser les différences de dilatation des composants dues aux forts gradients de température dans la liaison entre la pièce chaude (pointeau 14) et la pièce froide (système d'attache 16).

L'invention présente un avantage supplémentaire du fait de la densité modérée du matériau présentant des caractéristiques thermiques isolantes, de type céramique. Il en résulte une diminution de la masse inerte embarquée dans un propulseur selon l'invention.

## Revendications

1. Propulseur (10) comprenant
a. une chambre de combustion (11) destinée à recevoir un chargement propulsif (12),
b. un ensemble-tuyère (13) composé de une ou plusieurs tuyères par lequel la détente de gaz de combustion issus du chargement propulsif (12) après allumage du chargement propulsif (12) s'effectue,
c. un pointeau (14) destiné à faire varier une section (15) d'un col de l'ensemble-tuyère (13), sollicité thermiquement par les gaz de combustion,
d. un système d'attache (16) apte à assurer un déplacement du pointeau (14) dans le col de l'ensemble-tuyère (13),
e. une pièce intermédiaire (17) positionnée entre le pointeau (14) et le système d'attache (16), destinée à isoler thermiquement le système d'attache (16) du pointeau (14), au moins une partie de la pièce intermédiaire (17) étant réalisée dans un matériau présentant des caractéristiques thermiques isolantes, de type céramique,
la pièce intermédiaire (17) enveloppant au moins partiellement le pointeau (14), une partie du pointeau (14) s'étendant longitudinalement selon un premier axe Z, une portion de la partie du pointeau (14) s'étendant longitudinalement selon le premier axe Z formant une surface de contact (18) avec la pièce intermédiaire (17), et la normale (19) à la surface de contact (18) étant sécante avec le premier axe Z, ledit propulseur étant **caractérisé en ce que** la surface de contact (18) est de forme tronconique.

2. Propulseur (10) selon la revendication 2, **caractérisé en ce que** la normale (19) à la surface de contact (18) forme un angle (20) avec le premier axe Z en tout point de la surface de contact (18).

3. Propulseur (10) selon l'une quelconque des revendications 1 ou 2, **caractérisé en ce que** le système d'attache (16) comprend une partie formant une enveloppe d'au moins une partie de la pièce intermédiaire (17).

4. Propulseur (10) selon l'une quelconque des revendications 1 à 3, **caractérisé en ce qu'**il comprend en outre au moins un joint élastique (21) entre le système d'attache (16) et la pièce intermédiaire (17).

## Patentansprüche

1. Treibwerk (10), umfassend:
a. eine Brennkammer (11), die bestimmt ist, um eine Treibladung (12) zu erhalten,
b. eine Düsenanordnung (13), die aus einer oder mehreren Düsen besteht, durch die die Expansion von Verbrennungsgasen, die aus der Treibladung (12) nach der Zündung der Treibladung (12) hervorgegangen sind, erfolgt,
c. eine Düsennadel (14), die bestimmt ist, um einen Abschnitt (15) eines Kragens der Düsenanordnung (13) zu variieren, der von den Verbrennungsgasen thermisch belastet wird,
d. ein Befestigungssystem (16), das geeignet ist, eine Verschiebung der Düsennadel (14) im Kragen der Düsenanordnung (13) zu gewährleisten,
e. ein Zwischenstück (17), das zwischen der Düsennadel (14) und dem Befestigungssystem (16) angeordnet ist und bestimmt ist, um das Befestigungssystem (16) von der Düsennadel (14) thermisch zu isolieren, wobei mindestens ein Teil des Zwischenstücks (17) aus einem Material besteht, das wärmeisolierende Eigenschaften keramischer Art aufweist,
wobei das Zwischenstück (17) mindestens teilweise die Düsennadel (14) umhüllt, ein Teil der Düsennadel (14) sich in Längsrichtung entlang einer ersten z-Achse erstreckt, ein Bereich des Teils der Düsennadel (14) sich in Längsrichtung entlang der ersten z-Achse erstreckt und eine Kontaktfläche (18) mit dem Zwischenstück (17) bildet und die Senkrechte (19) zur Kontaktfläche (18) die erste z-Achse schneidet, wobei das Treibwerk **dadurch gekennzeichnet ist, dass** die Kontaktfläche (18) kegelstumpfförmig ist.

2. Treibwerk (10) nach Anspruch 2, **dadurch gekennzeichnet, dass** die Senkrechte (19) zur Kontaktfläche (18) an jedem Punkt der Kontaktfläche (18) einen Winkel (20) mit der ersten z-Achse bildet.

3. Treibwerk (10) nach einem der Ansprüche 1 oder 2, **dadurch gekennzeichnet, dass** das Befestigungssystem (16) einen Teil umfasst, der eine Umhüllung von mindestens einem Teil des Zwischenstücks (17) bildet.

4. Treibwerk (10) nach einem der Ansprüche 1 bis 3, **dadurch gekennzeichnet, dass** es ferner mindestens eine elastische Dichtung (21) zwischen dem Befestigungssystem (16) und dem Zwischenstück (17) umfasst.

## Claims

1. A propeller (10) comprising
a. a combustion chamber (11) intended to receive a propellant charge (12),
b. a nozzle assembly (13) composed of one or more nozzles through which the expansion of combustion gases from the propellant charge (12) after ignition of the propellant charge (12) is carried out,
c. a needle (14) intended to vary a section (15) of a neck of the nozzle assembly (13), thermally stressed by the combustion gases,
d. an attachment system (16) capable of ensuring movement of the needle (14) in the neck of the nozzle assembly (13),
e. an intermediate piece (17) positioned between the needle (14) and the attachment system (16), intended to thermally insulate the attachment system (16) from the needle (14), at least part of the intermediate piece (17) being made of a material having thermal insulating features, of the ceramic type,
the intermediate piece (17) at least partially enveloping the needle (14), a part of the needle (14) extending longitudinally along a first axis Z, a portion of the part of the needle (14) extending longitudinally along the first axis Z forming a contact surface (18) with the intermediate piece (17), and the normal (19) to the contact surface (18) being secant with the first axis Z, said propeller being **characterised in that** the contact surface (18) is frustoconical in shape.

2. The propeller (10) according to claim 2, **characterised in that** the normal (19) to the contact surface (18) forms an angle (20) with the first axis Z at any point of the contact surface (18).

3. The propeller (10) according to any one of claims 1 or 2, **characterised in that** the attachment system (16) comprises a part forming an envelope of at least a part of the intermediate piece (17).

4. The propeller (10) according to any one of claims 1 to 3, **characterised in that** it further comprises at least one elastic joint (21) between the attachment system (16) and the intermediate piece (17).
